# EUROPEAN PATENT APPLICATION

(11) **EP 3 021 593 A1**
(43) Date of publication of application: **18.05.2016**
(21) Application number: 14773492.5
(22) Date of filing: 06.03.2014
(51) Int. Cl.: H04N 21/458

(54) **CHANNEL SETTING METHOD, DEVICE, APPARATUS AND COMPUTER STORAGE MEDIUM**

(30) Priority: 09.07.2013 CN 201310286893
(71) Applicant: ZTE Corporation, Guangdong Province 518057 (CN)
(72) Inventor: WEI, Feng, Shenzhen Guangdong 518057 (CN); TU, Chengyi, Shenzhen Guangdong 518057 (CN); LIANG, Guozhu, Shenzhen Guangdong 518057 (CN)
(74) Representative: Tischner, Oliver
(86) International application number: PCT/CN2014/073002
(87) International publication number: WO 2014/154086

(57) **Abstract**

The embodiments of the present disclosure discloses a channel setting method, device, apparatus, and a non-volatile storage medium. The method includes that: an initial user channel hybrid sequence, a global channel hybrid sequence and a correspondence between the initial user channel hybrid sequence and the global channel hybrid sequence are acquired from an Electronic Program Guide (EPG) system and cached; and according to received channel setting information input by a user, the cached initial user channel hybrid sequence is updated, and the correspondence between the initial user channel hybrid sequence and the global channel hybrid sequence is updated.

## Description

### TECHNICAL FIELD

The present disclosure relates to a channel setting technology in the field of telecommunication, and in particular to a channel setting method, device apparatus, and a computer storage medium.

### BACKGROUND

At present, two hybrid sequence forms are adopted for channels in an Internet Protocol Television (IPTV) service system: a user-side-based hybrid sequence (called a user channel hybrid sequence for short) and an IPTV service system side-based global channel hybrid sequence (called a global channel hybrid sequence for short).

A hybrid sequence refers to sequencing channels according to a preset rule and allocating hybrid sequence numbers (including user channel hybrid sequence numbers and global channel hybrid sequence numbers) to the sequenced channels. Service operation such as subscription and authentication of an IPTV service system over channels is executed on the basis of a global channel hybrid sequence; and the sequence of channels in a channel list displayed to all users by an Electronic Program Guide (EPG) system in a unified manner corresponds to a user channel hybrid sequence. At present, a user cannot execute customized operation on a channel sequence in a user channel hybrid sequence according to a personal preference.

For example, when a certain favourite channel of a user is allocated to a user channel hybrid sequence with many channels by an operating company, the operation of requesting to play a program by the user is relatively tedious: if the channel is requested to be played through a direct broadcast page, it is necessary to find a page where the channel is located by page turning, and then the program of the channel is requested to be played; and if the program of the channel is directly requested to be played in a manner of inputting a channel number through number keys of a remote controller, it is necessary to remember a user channel hybrid sequence number of the channel for requesting to play the program.

From the above, there are hundreds or even thousands of channels on an IPTV service system side of an existing network, requesting to play a program of a channel in the abovementioned manners brings great inconvenience to a user and influences a user experience.

### SUMMARY

The embodiments of the present disclosure provide a channel setting method, device, apparatus, and a computer storage medium, so as to solve the problem that the operation of a user for requesting for a program of a channel is tedious, and thus an interactive experience of the user is improved.

The technical solutions of the embodiments of the present disclosure are implemented as follows.

An embodiment of the present disclosure provides a channel setting method, which may include that:
an initial user channel hybrid sequence, a global channel hybrid sequence and a correspondence between the initial user channel hybrid sequence and the global channel hybrid sequence are acquired from an EPG system and cached; and
according to received channel setting information input by a user, the cached initial user channel hybrid sequence is updated, and the correspondence between the initial user channel hybrid sequence and the global channel hybrid sequence is updated.

Preferably, after the correspondence between the initial user channel hybrid sequence and the global channel hybrid sequence is updated, the method may further include that:
each transmission stream address corresponding to each channel in the global channel hybrid sequence is acquired from the EPG system and cached;
according to a received user channel hybrid sequence number of a channel requested by the user and the correspondence between the user channel hybrid sequence and the global channel hybrid sequence, a global channel hybrid sequence number corresponding to the user channel hybrid sequence number is determined; and
according to the determined global channel hybrid sequence number and the each cached transmission stream address corresponding to the each channel in the global channel hybrid sequence, a transmission stream address of the channel requested by the user is determined, and data corresponding to the transmission stream address is loaded for a user terminal.

Preferably, the method may further include that:
the updated correspondence between the user channel hybrid sequence and the global channel hybrid sequence is stored into a non-volatile memory; and
after an initial user channel hybrid sequence, a correspondence between the initial user channel hybrid sequence and a global channel hybrid sequence and each transmission stream address corresponding to each channel in the global channel hybrid sequence are reacquired from the EPG system and cached, the cached correspondence is updated according to the stored correspondence.

Preferably, after the correspondence between the initial user channel hybrid sequence and the global channel hybrid sequence is reacquired from the EPG system and cached, the method may further include that:
when it is determined that at least one channel in the global channel hybrid sequence which is reacquired from the EPG system and cached is updated, a correspondence between a user channel hybrid sequence and a global channel hybrid sequence of the at least one updated channel is synchronized to the correspondence stored in the non-volatile memory.

Preferably, the method may further include that:
the global channel hybrid sequence which is acquired from the EPG system and cached is stored into the non-volatile memory; and
correspondingly, the step that it is determined that at least one channel in the global channel hybrid sequence which is reacquired from the EPG system and cached is updated may include that:
   when an ascending or descending sequence character string of hybrid sequence numbers of the stored global channel hybrid sequence is not matched with an ascending or descending sequence character string of hybrid sequence numbers of the global channel hybrid sequence which is acquired from the EPG system and cached, it is determined that at least one channel in the global channel hybrid sequence which is acquired from the EPG system and cached is updated.

Preferably, the step that it is determined that at least one channel in the global channel hybrid sequence which is reacquired from the EPG system and cached is updated may include that:
the global channel hybrid sequence is extracted from the stored correspondence, and when an ascending or descending sequence character string of hybrid sequence numbers of the extracted global channel hybrid sequence is not matched with the ascending or descending sequence character string of the hybrid sequence numbers of the global channel hybrid sequence which is acquired from the EPG system and cached, it is determined that at least one channel in the global channel hybrid sequence which is acquired from the EPG system and cached is updated.

An embodiment of the present disclosure further provides a channel setting device, which may include an acquisition module, an updating module and a caching module, wherein
the acquisition module may be configured to acquire from an EPG system and store an initial user channel hybrid sequence, a global channel hybrid sequence and a correspondence between the initial user channel hybrid sequence and the global channel hybrid sequence to the caching module; and
the updating module may be configured to, according to received channel setting information input by a user, update the initial user channel hybrid sequence stored in the caching module and update the correspondence, stored in the caching module, between the initial user channel hybrid sequence and the global channel hybrid sequence.

Preferably, the acquisition module may further be configured to acquire from the EPG system and store each transmission stream address corresponding to each channel in the global channel hybrid sequence to the caching module;
the device may further include:
a determination module, configured to, according to a received user channel hybrid sequence number of a channel requested by the user and the correspondence, stored in the caching module, between the user channel hybrid sequence and the global channel hybrid sequence, determine a global channel hybrid sequence number corresponding to the user channel hybrid sequence number; and
a loading module, configured to, according to the determined global channel hybrid sequence number and the each cached transmission stream address, stored in the caching module, corresponding to the each channel in the global channel hybrid sequence, determine a transmission stream address of the channel requested by the user, and load data corresponding to the transmission stream address for a user terminal.

Preferably, the device may further include:
an access module, configured to store the updated correspondence between the user channel hybrid sequence and the global channel hybrid sequence into a non-volatile memory; and
the updating module may further be configured to, after the acquisition module reacquires from the EPG system and caches an initial user channel hybrid sequence, a correspondence between the initial user channel hybrid sequence and a global channel hybrid sequence and each transmission stream address corresponding to each channel in the global channel hybrid sequence in the caching module, update the correspondence stored in the caching module according to the correspondence stored in the non-volatile memory.

Preferably, the determination module may further be configured to, when determining that at least one channel in the global channel hybrid sequence which is reacquired from the EPG system and stored in the caching module by the acquisition module is updated, trigger the updating module; and
the updating module may further be configured to synchronize a correspondence between a user channel hybrid sequence and a global channel hybrid sequence of the at least one updated channel into the correspondence stored in the non-volatile memory through the access module.

Preferably, the access module may further be configured to store the global channel hybrid sequence which is acquired from the EPG system and cached into the non-volatile memory; and
the determination module may further be configured to, when an ascending or descending sequence character string of hybrid sequence numbers of the global channel hybrid sequence stored in the non-volatile memory is not matched with an ascending or descending sequence character string of hybrid sequence numbers of the global channel hybrid sequence cached in the caching module, determine that at least one channel in the cached global channel hybrid sequence is updated.

Preferably, the determination module may further be configured to extract the global channel hybrid sequence from the correspondence stored in the non-volatile memory, and when an ascending or descending sequence character string of hybrid sequence numbers of the extracted global channel hybrid sequence is not matched with the ascending or descending sequence character string of the hybrid sequence numbers of the global channel hybrid sequence stored in the caching module, determine that at least one channel in the global channel hybrid sequence stored in the caching module is updated.

An embodiment of the present disclosure further provides a channel setting apparatus, which may include the abovementioned channel setting device.

An embodiment of the present disclosure further provides a computer storage medium, in which a computer-executable instruction may be stored, the computer-executable instruction being configured to execute the abovementioned channel setting method.

In the technical solutions provided by the embodiments of the present disclosure, setting information about a user channel hybrid sequence is received from a user, and a cached initial user channel hybrid sequence and a correspondence between the initial user channel hybrid sequence and a global channel hybrid sequence are updated according to the setting information, so that a response may be given to a request of the user for playing a channel corresponding to a specified hybrid sequence number according to the updated user channel hybrid sequence and the correspondence between the user channel hybrid sequence and the global channel hybrid sequence, and the problem that the operation of the user for requesting for a program of a channel is tedious is solved.

### BRIEF DESCRIPTION OF THE DRAWINGS

Fig. 1 is a flowchart of implementation of a channel setting method according to an embodiment of the present disclosure;
Fig. 2 is a structure diagram of a channel setting device according to an embodiment of the present disclosure;
Fig. 3 is a first flowchart of implementation of channel setting according to an embodiment of the present disclosure;
Fig. 4 is a second flowchart of implementation of channel setting according to an embodiment of the present disclosure;
Fig. 5 is a third flowchart of implementation of channel setting according to an embodiment of the present disclosure; and
Fig. 6 is a fourth flowchart of implementation of channel setting according to an embodiment of the present disclosure.

### DETAILED DESCRIPTION

In the embodiments of the present disclosure, a setting authority over an initial user channel hybrid sequence is endowed to a user, and service channel data which is downloaded from an EPG system and cached is updated according to the setting of the user; and data of a channel requested by the user is loaded for a user-side terminal according to the updated cached service channel data.

The present disclosure is further described below with reference to the drawings and specific embodiments in detail.

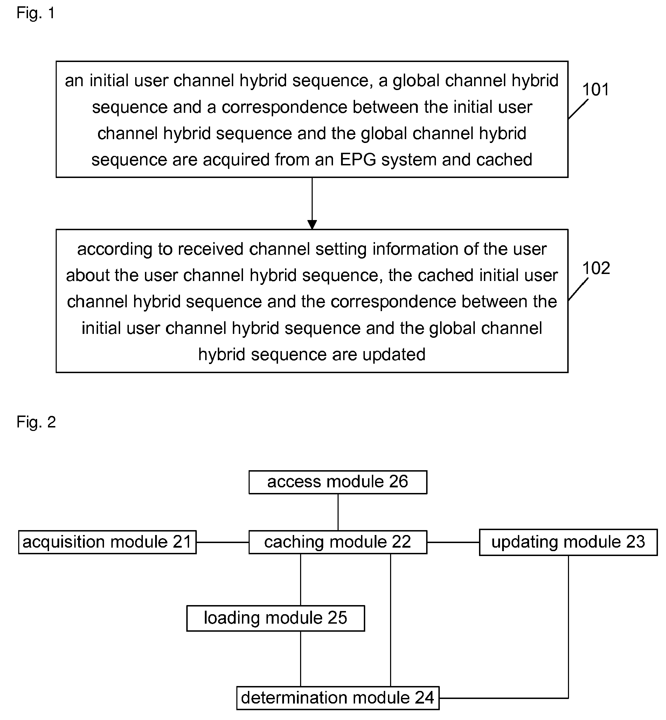

An embodiment of the present disclosure records a channel setting method. Fig. 1 is a flowchart of implementation of a channel setting method according to an embodiment of the present disclosure, and as shown in Fig. 1, the method includes the following steps.

Step 101: an initial user channel hybrid sequence, a global channel hybrid sequence and a correspondence between the initial user channel hybrid sequence and the global channel hybrid sequence are acquired from an EPG system and cached.

In the embodiment of the present disclosure, the initial user channel hybrid sequence is a sequence of channels subscribed by a user (the channels are identified by initial user channel hybrid sequence numbers), and may be shown as a list; the hybrid sequence numbers are allocated to the channels in the initial user channel hybrid sequence according to a preset rule, for example, when the user subscribes channel a, channel b and channel c, initial hybrid sequence numbers 1, 2 and 3 may be correspondingly allocated to these channels; and the global channel hybrid sequence is a sequence of all channels on an EPG system side, unique global channel hybrid sequence numbers are correspondingly allocated to all the channels for the EPG system to identify the channels according to the global channel hybrid sequence numbers so as to perform operations such as authentication and subscription, for example, if global channel hybrid sequence numbers corresponding to channel a, channel b and channel c are 4, 5 and 6, then the above correspondence is 1 | 4, 2 | 5 and 3 | 6, where the number before separatrix " | " is a user channel hybrid sequence number, and the number after separatrix " | " is a global channel hybrid sequence number.

In a practical application, a transmission stream address may be a Real Time Streaming Protocol (RTSP) address.

Step 102: according to received channel setting information of the user about the user channel hybrid sequence, the cached initial user channel hybrid sequence and the correspondence between the initial user channel hybrid sequence and the global channel hybrid sequence are updated.

In a practical application, a child lock hybrid sequence (which may be a list), i.e. user channel hybrid sequence numbers of channels which are restricted to be played for a child in the initial user channel hybrid sequence, may also be acquired from the EPG system in Step 101, and correspondingly, the child lock hybrid sequence may also be updated in Step 101.

In a practical application, the channel service data downloaded from the EPG system further includes channel service attribute information such as channel names, channel codes (channel identifiers generated by a content distribution network side), channel time shift lengths and channel levels.

For example, the channels with the user channel hybrid sequence numbers 1 and 3 in Step 101 are correspondingly set to be exchanged, and then the correspondence is updated to be: 3 | 4, 2 | 5 and 1 | 6; and if the child lock hybrid sequence includes the user channel hybrid sequence number 1, then the user channel hybrid sequence number 1 in the child lock hybrid sequence is updated with 3.

In order to avoid loss of the above correspondence in case of a power failure, the updated correspondence between the user channel hybrid sequence and the global channel hybrid sequence is stored into a non-volatile memory; and
after an initial user channel hybrid sequence, a global channel hybrid sequence, a correspondence between the initial user channel hybrid sequence and the global channel hybrid sequence and each transmission stream address corresponding to each channel in the global channel hybrid sequence are reacquired from the EPG system and cached, the cached correspondence is updated according to the stored correspondence.

Here, the non-volatile memory may be located on the EPG system side, or may also be located in a user-side apparatus which caches the correspondence, or may also be located on both the EPG system side and the user-side apparatus; and when the correspondence is stored into a non-volatile memory of the EPG system side, the risk of correspondence data loss caused by shutdown of the user-side apparatus is reduced, and after the user-side apparatus is recovered, the backed up correspondence may be acquired from the EPG system side.

When at least one channel maintained on the EPG system side is updated, for example, a channel is added or deleted, the correspondence still stores information of the deleted channel, and does not have information about the added channel. Correspondingly, in an implementation mode, when it is determined that at least one channel in the global channel hybrid sequence which is reacquired from the EPG system and cached is updated after the correspondence between the initial user channel hybrid sequence and the global channel hybrid sequence is reacquired from the EPG system and cached, a correspondence between a user channel hybrid sequence and a global channel hybrid sequence of the at least one updated channel is synchronized to the correspondence stored in the non-volatile memory.

In the implementation mode, after the correspondence between the initial user channel hybrid sequence and the global channel hybrid sequence is reacquired from the EPG system and cached, the global channel hybrid sequence which is acquired from the EPG system and cached may also be stored into the non-volatile memory; and
correspondingly, when an ascending or descending sequence character string of hybrid sequence numbers of the stored global channel hybrid sequence is not matched with an ascending or descending sequence character string of hybrid sequence numbers of the global channel hybrid sequence which is acquired from the EPG system and cached, it is determined that at least one channel in the global channel hybrid sequence which is acquired from the EPG system and cached is updated.

Here, the step that it is determined that at least one channel in the global channel hybrid sequence which is reacquired from the EPG system and cached is updated includes that:
the global channel hybrid sequence is extracted from the stored correspondence, and when an ascending or descending sequence character string of hybrid sequence numbers of the extracted global channel hybrid sequence is not matched with the ascending or descending sequence character string of the hybrid sequence numbers of the global channel hybrid sequence which is acquired from the EPG system and cached, it is determined that at least one channel in the global channel hybrid sequence which is acquired from the EPG system and cached is updated.

For example, the ascending sequence character string of the hybrid sequence numbers of the stored global channel hybrid sequence or the ascending sequence character string of the hybrid sequence numbers of the global channel hybrid sequence extracted from the stored correspondence is set to be 1, 3 and 5, and when the channels on the EPG system side are updated, for example, channel 9 is added (9 is the global channel hybrid sequence number of the added channel on the EPG system side), the ascending sequence character string of the hybrid sequence numbers on the EPG system side is 1, 3, 5 and 9 and is not matched with the character string 1, 3 and 5, which indicates that the global channel hybrid sequence on the EPG system side is updated, then the global channel hybrid sequence number 9 is stored into the non-volatile memory, or, the correspondence, stored in the non-volatile memory, between the user channel hybrid sequence and the global channel hybrid sequence is updated according to a correspondence between the global channel hybrid sequence number and the initial user channel hybrid sequence number of channel 9.

In an implementation mode, each transmission stream address corresponding to each channel in the global channel hybrid sequence is further acquired; correspondingly, when a user channel hybrid sequence number of a channel requested by the user is received, a global channel hybrid sequence number corresponding to the user channel hybrid sequence number is determined according to the updated cached user channel hybrid sequence, global channel hybrid sequence and correspondence between the user channel hybrid sequence and the global channel hybrid sequence; and according to the determined global channel hybrid sequence number and the each cached transmission stream address corresponding to the each channel in the global channel hybrid sequence, the transmission stream address of the channel requested by the user is determined, and data corresponding to the transmission stream address is loaded for a user terminal.

For example, if the correspondences corresponding to a channel with an initial user channel hybrid sequence number 5 (a global channel hybrid sequence number of the channel is assumed to be 7) and a channel with an initial user channel hybrid sequence number 1 (a global channel hybrid sequence number of the channel is assumed to be 9) are 5 | 7 and 1 | 9, then when the user exchanges the channel having the initial user channel hybrid sequence number 5 with the channel having the initial user channel hybrid sequence number 1, the updated correspondences are: 5 | 9 and 1 | 7.

For example, when the user requests for the channel with the user channel hybrid sequence number 5, the global channel hybrid sequence number corresponding to the channel is determined to be 7 according to the updated correspondences (5 | 9 and 1 | 7), and a transmission stream address corresponding to the channel is queried by taking the hybrid sequence number 7 as an index.

In the technical solution provided by the embodiment of the present disclosure, setting information about a user channel hybrid sequence is received from a user, and the cached initial user channel hybrid sequence and a correspondence between the initial user channel hybrid sequence and the global channel hybrid sequence are updated according to the setting information, so that a response may be given to a request of the user for playing a channel corresponding to a specified hybrid sequence number according to the updated user channel hybrid sequence and the correspondence between the user channel hybrid sequence and the global channel hybrid sequence, and the problem that the operation of the user for requesting for a program of the channel is tedious is solved; and moreover, the problem that an existing user channel hybrid sequence on a user side cannot be set by the user is solved, the user may sequence favourite channels according to preferences, habits of the user are met, interactivity of a live broadcast service of a channel of an IPTV system is improved, domination and control of the user over channel setting are implemented, and a user experience is further enhanced.

An embodiment of the present disclosure further records a channel setting device. Fig. 2 is a structure diagram of a channel setting device according to an embodiment of the present disclosure. As shown in Fig. 2, the device includes an acquisition module 21, an updating module 23 and a caching module 22, wherein
the acquisition module 21 is configured to acquire from an EPG system and store an initial user channel hybrid sequence, a global channel hybrid sequence and a correspondence between the initial user channel hybrid sequence and the global channel hybrid sequence to the caching module 22; and
the updating module 23 is configured to, according to received channel setting information input by a user, update the initial user channel hybrid sequence stored in the caching module 22 and update the correspondence, stored in the caching module 22, between the initial user channel hybrid sequence and the global channel hybrid sequence.

Preferably, the acquisition module 21 is further configured to acquire from the EPG system and store each transmission stream address corresponding to each channel in the global channel hybrid sequence to the caching module 22;
the device further includes:
a determination module 24, configured to, according to a received user channel hybrid sequence number of a channel requested by the user and the correspondence, stored in the caching module 22, between the user channel hybrid sequence and the global channel hybrid sequence, determine a global channel hybrid sequence number corresponding to the user channel hybrid sequence number; and
a loading module 25, configured to, according to the determined global channel hybrid sequence number and the each transmission stream address, stored in the caching module 22, corresponding to the each channel in the global channel hybrid sequence, determine a transmission stream address of the channel requested by the user, and load data corresponding to the transmission stream address for a user terminal.

Preferably, the device further includes:
an access module 26, configured to store the updated correspondence between the user channel hybrid sequence and the global channel hybrid sequence into a non-volatile memory; and
the updating module 23 is further configured to, after the acquisition module 21 reacquires from the EPG system and caches an initial user channel hybrid sequence, a correspondence between the initial user channel hybrid sequence and a global channel hybrid sequence and each transmission stream address corresponding to each channel in the global channel hybrid sequence in the caching module 22, update the correspondence stored in the caching module 22 according to the correspondence stored in the non-volatile memory.

Preferably, the determination module 24 is further configured to, when it is determined that at least one channel in the global channel hybrid sequence which is reacquired from the EPG system and stored in the caching module 22 by the acquisition module 21 is updated, trigger the updating module 23; and
the updating module 23 is further configured to synchronize a correspondence between a user channel hybrid sequence and a global channel hybrid sequence of the at least one updated channel into the correspondence stored in the non-volatile memory through the access module 26.

Preferably, the access module 26 is further configured to store the global channel hybrid sequence which is acquired from the EPG system and cached into the non-volatile memory; and
the determination module 24 is further configured to, when an ascending or descending sequence character string of hybrid sequence numbers of the global channel hybrid sequence stored in the non-volatile memory is not matched with an ascending or descending sequence character string of hybrid sequence numbers of the global channel hybrid sequence cached in the caching module 22, determine that the at least one channel in the cached global channel hybrid sequence is updated.

Preferably, the determination module 24 is further configured to extract the global channel hybrid sequence from the correspondence stored in the non-volatile memory, and when an ascending or descending sequence character string of hybrid sequence numbers of the extracted global channel hybrid sequence is not matched with the ascending or descending sequence character string of the hybrid sequence numbers of the global channel hybrid sequence stored in the caching module 22, determine that the at least one channel in the global channel hybrid sequence stored in the caching module 22 is updated.

In a practical application, the acquisition module 21, the updating module 23, the determination module 24 and the loading module 25 may be implemented by a Central Processing Unit (CPU), Digital Signal Processor (DSP) or Field Programmable Gate Array (FPGA) in the channel setting device; the caching module 22 may be implemented by a volatile storage medium in the channel setting device; and the access module 26 may be implemented by a non-volatile storage medium in the channel setting device.

An embodiment of the present disclosure further records a channel setting apparatus, which includes the abovementioned channel setting device. The channel setting apparatus may be used instead of a Set Top Box (STB) in the related technology.

In a practical application, the channel setting device provided by the embodiment of the present disclosure may be, in a form of module, embedded into an IPTV service STB, and the STB is not limited by a model number, a specification or a manufacturer.

It is to be noted that the present disclosure is described in subsequent embodiments with an STB including the abovementioned channel setting device as an example, but the subsequent embodiments are not intended to form improper limits to the present disclosure.

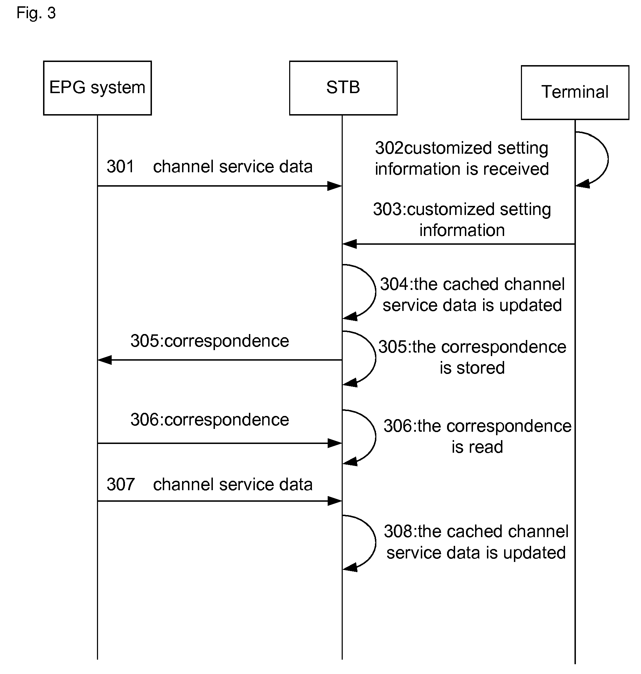

Fig. 3 is a first flowchart of implementation of channel setting according to an embodiment of the present disclosure, and as shown in Fig. 3, the flow includes the following steps.

Step 301: an EPG system transmits channel service data to an STB.

Here, the channel service data includes: an initial user channel hybrid sequence, a global channel hybrid sequence, a correspondence between the initial user channel hybrid sequence and the global channel hybrid sequence, and each transmission stream address corresponding to each channel in the global channel hybrid sequence.

Here, the STB stores the channel service data in a local cache for a browser module of the STB to call.

The step is a default operation when the STB is started and logs in an IPTV service system.

Step 302~Step 303: a terminal receives setting information customized by a user for a current user channel hybrid sequence through a setting page, and sends the setting information to the STB.

The terminal calls an open customized interface of the STB for the user to set the initial user channel hybrid sequence cached by the STB.

Step 304: the STB updates the channel service data in the local cache according to the received setting information.

For example, the initial user channel hybrid sequence and the correspondence between the initial user channel hybrid sequence and the global channel hybrid sequence are updated according to the received setting information.

Step 305: the STB stores the correspondence into a local non-volatile memory and/or a non-volatile memory of the EPG system.

Here, the non-volatile memory of the STB may be a flash memory, so that stored correspondence data may be prevented from loss after the STB is powered off and restarted.

In the step, the STB uploads the correspondence to the EPG system for storage through an open interface of the EPG system.

Steps after Step 305 involve processing after power-off and restarting of the STB.

Step 306: the STB reads the correspondence stored in the local non-volatile memory and/or the non-volatile memory of the EPG system to the cache.

Step 307: the STB re-downloads the channel service data from the EPG system.

Correspondingly, the STB caches the channel service data.

Here, an execution sequence of Step 306 and Step 307 may be regulated.

Step 308: the STB updates the cached channel service data according to the read correspondence.

For example, the initial user channel hybrid sequence and the correspondence between the initial user channel hybrid sequence and the global channel hybrid sequence, which are transmitted by the EPG system, are updated according to the read correspondence.

If the correspondence data in the local non-volatile memory gets lost due to shutdown of the STB after Step 305 and the correspondence is simultaneously stored into the local non-volatile memory and the non-volatile memory of the EPG system in Step 304, in the step, the correspondence uploaded for backup in Step 304 is acquired through the open interface of the EPG system, and the cached initial user channel hybrid sequence and the correspondence between the initial user channel hybrid sequence and the global channel hybrid sequence, which are transmitted by the EPG system, are updated according to the correspondence.

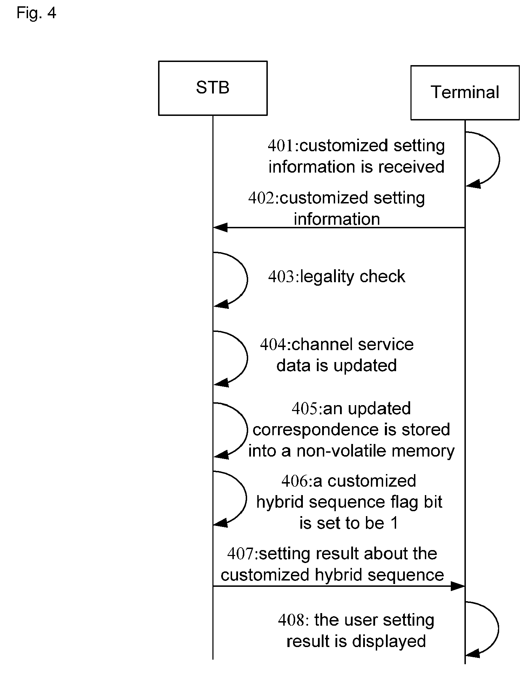

Fig. 4 is a second flowchart of implementation of channel setting according to an embodiment of the present disclosure, and as shown in Fig. 4, the flow includes the following steps.

Step 401~Step 402: a terminal receives setting information of a user about a user channel hybrid sequence number of a certain channel, and sends the setting information to an STB.

The terminal calls an open interface of an EPG system to display a setting page of the user channel hybrid sequence to the user and receive the setting of the user.

Step 403: the STB judges whether hybrid sequence numbers set by the user pass a legality check or not, Step 404 is executed if the hybrid sequence numbers are legal, otherwise Step 407 is executed to return a setting result that a hybrid sequence number check failure occurs to the terminal.

The legality check refers to judging whether the user channel hybrid sequence numbers set by the user are in a hybrid sequence array corresponding to the user channel hybrid sequence or not. For example, hybrid sequence numbers of channels visible to a current user are 1, 2 and 3 (it is supposed that 1 is subscribed, while 2 and 3 are not subscribed), the user sets the hybrid sequence number of channel 1 as 4 instead of 1, that is, channel 1 is exchanged with channel 4; since a hybrid sequence number 4 of channel 4 is not in the hybrid sequence array (1, 2 and 3) corresponding to the user channel hybrid sequence, the user is forbidden to perform the abovementioned setting.

Step 404: the STB updates locally cached channel service data according to the received setting information.

For example, an initial user channel hybrid sequence and a correspondence between the initial user channel hybrid sequence and a global channel hybrid sequence are updated according to the received setting information; and correspondingly, if the STB acquires a child lock hybrid sequence in the form of list, then a child lock hybrid sequence is correspondingly updated.

Step 405: the STB stores the updated cached correspondence into a local non-volatile memory.

The STB may also store the correspondence updated in Step 404 into a non-volatile memory of the EPG system.

Here, the non-volatile memory of the STB may be a flash memory, so that stored correspondence data may be prevented from loss after the STB is powered off and restarted; and the STB uploads the correspondence to the EPG system for storage through the open interface of the EPG system.

Step 406: the STB sets a customized hybrid sequence flag bit 1.

The flag bit 1 means that at least one of the non-volatile memories in Step 404 stores the correspondence between the user channel hybrid sequence and the global channel hybrid sequence.

Step 407: the STB returns a setting result about a customized hybrid sequence to the terminal.

Step 408: the terminal displays the setting result to the user.

For example, when the user channel hybrid sequence numbers set by the user do not pass a check, a check failure is prompted; and when the STB returns the setting result about the customized hybrid sequence, the setting result is displayed to the user.

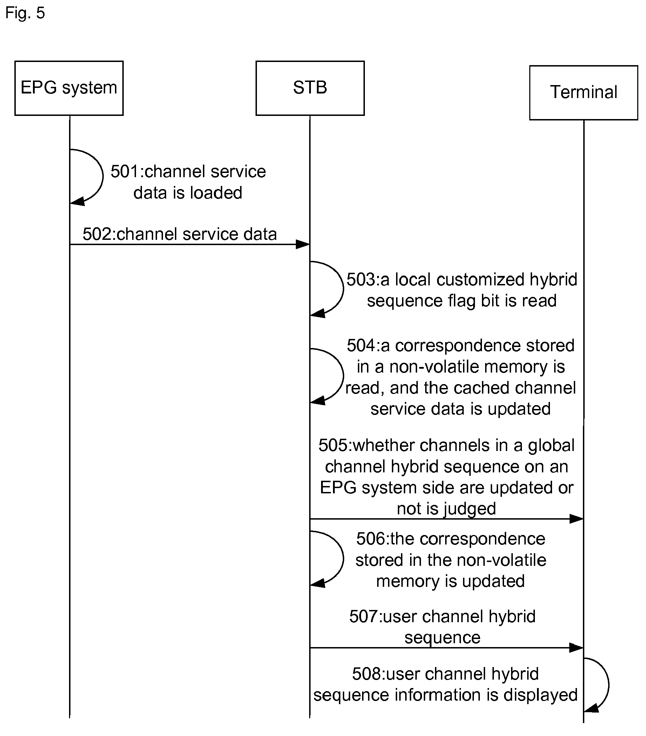

Fig. 5 is a third flowchart of implementation of channel setting according to an embodiment of the present disclosure, and as shown in Fig. 5, the flow includes the following steps.

Step 501: an EPG system loads channel service data.

Here, the channel service data includes: an initial user channel hybrid sequence, a global channel hybrid sequence, a correspondence between the initial user channel hybrid sequence and the global channel hybrid sequence, and each transmission stream address corresponding to each channel in the global channel hybrid sequence.

Step 502: an STB acquires the channel service data from the EPG system.

Correspondingly, the STB caches the acquired channel service data.

The STB acquires the channel service data into a local JavaScript object to cache the channel service data through a built-in browser module.

Step 503: the STB reads a local customized hybrid sequence flag bit, Step 504 is executed if the flag bit is 1, otherwise, processing is stopped.

Step 504: the STB reads a correspondence between a user channel hybrid sequence and a global channel hybrid sequence from a non-volatile memory, and updates the cached channel service data according to the read correspondence.

The non-volatile memory is located in the STB and/or located in the EPG system.

For example, the STB reads the correspondence from a local non-volatile memory or a non-volatile memory of the EPG system to update the user channel hybrid sequence and the correspondence, cached in Step 502, between the user channel hybrid sequence and the global channel hybrid sequence; and correspondingly, if the STB also acquires a child lock hybrid sequence in Step 502, then the child lock hybrid sequence is updated.

Step 505: the STB judges whether at least one channel in the global channel hybrid sequence on an EPG system side is updated or not, Step 506 is executed if at least one channel is updated, otherwise, processing is stopped.

In the step, the operation of judging whether at least one channel in the global channel hybrid sequence on the EPG system side is updated or not may be implemented by Step 5051 to Step 5054:
Step 5051: the STB analyzes the correspondence in the non-volatile memory, extracts global channel hybrid sequence numbers of the channels in the correspondence, and generates a corresponding global channel hybrid sequence array.

Step 5052: the global channel hybrid sequence array is converted into an ascending or descending sequence character string.

Step 5053: the global channel hybrid sequence acquired and cached in Step 502 is analyzed and converted into a character string.

A sequence of the character string is the same as a sequence in Step 5052, that is, an ascending sequence is adopted for the two or a descending sequence is adopted for the two.

Step 5054: whether the character strings in Step 5052 and Step 5053 are matched with each other or not is judged, and if the character strings are matched, it is determined that the channels are updated, and the channels in the global channel hybrid sequence on the EPG system side are identified to be updated; otherwise it is determined that the channels are not updated.

Step 506: the STB updates the correspondence stored in the non-volatile memory according to a correspondence related to the at least one updated channel.

If a channel is added into the global channel hybrid sequence on the EPG system side, then the STB stores a correspondence, preset for the channel by the EPG system side, between an initial user channel hybrid sequence and a global channel hybrid sequence into the non-volatile memory; and if a channel is deleted from the global channel hybrid sequence on the EPG system side, a correspondence stored in the non-volatile memory and related to the deleted channel is deleted.

Step 506: the STB may also update the correspondence stored in the non-volatile memory into the cached correspondence updated in Step 504 so as to synchronize the correspondence related to the at least one updated channel to the non-volatile memory.

Step 507: the STB returns the updated user channel hybrid sequence to a terminal.

Step 508: the terminal displays user channel hybrid sequence information.

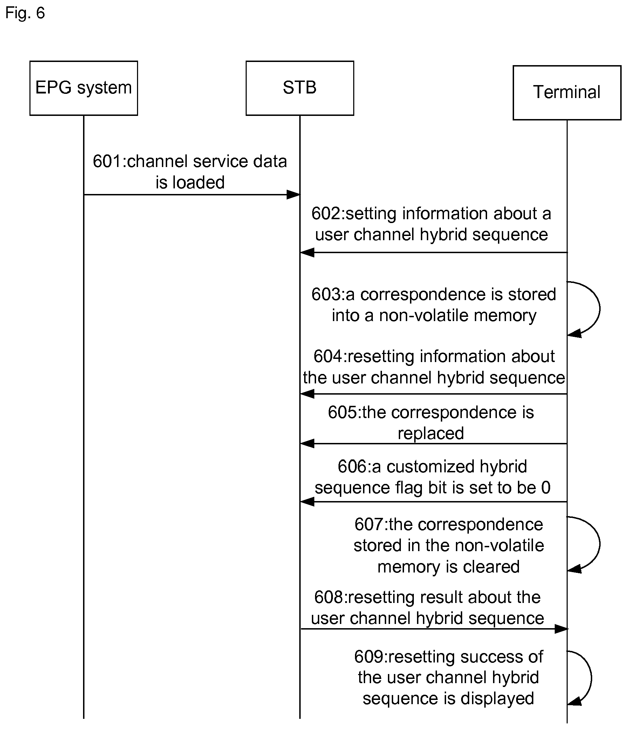

Fig. 6 is a fourth flowchart of implementation of channel setting according to an embodiment of the present disclosure, and as shown in Fig. 6, the flow includes the following steps.

Step 601: when an STB logs in an EPG system, the EPG system transmits channel service data to the STB.

Step 602: a terminal sends setting information about a user channel hybrid sequence to the STB.

Step 603: the STB stores the current user channel hybrid sequence and a correspondence between the user channel hybrid sequence and a global channel hybrid sequence into a non-volatile memory.

The non-volatile memory is located in the STB and/or located in the EPG system.

Correspondingly, if the EPG system also transmits a child lock hybrid sequence, the child lock hybrid sequence is backed up at the same time.

The operation that the STB updates the channel service data according to the setting information in the subsequent steps is the same as the above.

Step 604: the terminal sends resetting information about the user channel hybrid sequence to the STB.

The terminal calls a resetting interface of the STB to trigger the STB to perform the resetting operation.

Step 605: the STB replaces a current cached user channel hybrid sequence and a correspondence between the user channel hybrid sequence and a global channel hybrid sequence with the user channel hybrid sequence and the correspondence, stored in Step 603, between the user channel hybrid sequence and the global channel hybrid sequence.

Correspondingly, if the child lock hybrid sequence is also stored in Step 603, a current child lock hybrid sequence is replaced with the child lock hybrid sequence stored in Step 603.

Step 606: the STB sets a customized hybrid sequence flag bit 0.

The flag bit 0 means that a user does not set the user channel hybrid sequence.

Step 607: the STB clears the correspondence stored in the non-volatile memory.

Step 608: the STB returns a resetting result about the user channel hybrid sequence to the terminal.

Step 609: the terminal displays that a user channel hybrid sequence is reset successfully.

Those skilled in the art should know that the embodiments of the present disclosure may be provided as a method, a system or a computer program product. Therefore, the present disclosure may adopt a pure hardware embodiment, a pure software embodiment and a combined software and hardware embodiment. Moreover, the present disclosure may be implemented as a computer program product executed on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, apparatus (system) and computer program product according to the embodiments of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing apparatuses to generate a machine, so that a device for realizing a function specified in one flow or more flows in the flowcharts and/or one block or more blocks in the block diagrams is generated by the instructions executed through the computer or the processor of the other programmable data processing apparatuses.

These computer program instructions may also be stored in a computer-readable memory capable of guiding a computer or other programmable data processing apparatuses to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto a computer or other programmable data processing apparatuses, so that a series of operating steps are executed on the computer or other programmable data processing apparatuses to generate processing implemented by the computer, and steps for realizing the function specified in one flow or many flows in the flowcharts and/or one block or many blocks in the block diagrams are provided by the instructions executed on the computer or other programmable data processing apparatuses.

The above is only the preferred embodiments of the present disclosure and not intended to limit the scope of protection of the present disclosure; those skilled in the art may also make various improvements and embellishments without departing from the principle of the embodiments of the present disclosure, and these improvements and embellishments shall fall within the scope of protection of the embodiments of the present disclosure.

## Claims

1. A channel setting method, comprising:
acquiring from an Electronic Program Guide (EPG) system and caching an initial user channel hybrid sequence, a global channel hybrid sequence and a correspondence between the initial user channel hybrid sequence and the global channel hybrid sequence; and
according to received channel setting information input by a user, updating the cached initial user channel hybrid sequence and updating the correspondence between the initial user channel hybrid sequence and the global channel hybrid sequence.

2. The method according to claim 1, after updating the correspondence between the initial user channel hybrid sequence and the global channel hybrid sequence, the method further comprising:
acquiring from the EPG system and caching each transmission stream address corresponding to each channel in the global channel hybrid sequence;
according to a received user channel hybrid sequence number of a channel requested by the user and the correspondence between the user channel hybrid sequence and the global channel hybrid sequence, determining a global channel hybrid sequence number corresponding to the user channel hybrid sequence number; and
according to the determined global channel hybrid sequence number and the each cached transmission stream address corresponding to the each channel in the global channel hybrid sequence, determining a transmission stream address of the channel requested by the user, and loading data corresponding to the transmission stream address for a user terminal.

3. The method according to claim 1, further comprising:
storing the updated correspondence between the user channel hybrid sequence and the global channel hybrid sequence into a non-volatile memory; and
after reacquiring from the EPG system and caching an initial user channel hybrid sequence, a correspondence between the initial user channel hybrid sequence and a global channel hybrid sequence and each transmission stream address corresponding to each channel in the global channel hybrid sequence, updating the cached correspondence according to the stored correspondence.

4. The method according to claim 3, after reacquiring from the EPG system and caching the correspondence between the initial user channel hybrid sequence and the global channel hybrid sequence, the method further comprising:
when determining that at least one channel in the global channel hybrid sequence which is reacquired from the EPG system and cached is updated, synchronizing a correspondence between a user channel hybrid sequence and a global channel hybrid sequence of the at least one updated channel to the correspondence stored in the non-volatile memory.

5. The method according to claim 4, further comprising: storing the global channel hybrid sequence, which is acquired from the EPG system and cached, into the non-volatile memory;
correspondingly, the determining that at least one channel in the global channel hybrid sequence which is reacquired from the EPG system and cached is updated comprises:
when an ascending or descending sequence character string of hybrid sequence numbers of the stored global channel hybrid sequence is not matched with an ascending or descending sequence character string of hybrid sequence numbers of the global channel hybrid sequence which is acquired from the EPG system and cached, determining that at least one channel in the global channel hybrid sequence which is acquired from the EPG system and cached is updated.

6. The method according to claim 4, wherein the determining that at least one channel in the global channel hybrid sequence which is reacquired from the EPG system and cached is updated comprises:
extracting the global channel hybrid sequence from the stored correspondence, and when an ascending or descending sequence character string of hybrid sequence numbers of the extracted global channel hybrid sequence is not matched with the ascending or descending sequence character string of the hybrid sequence numbers of the global channel hybrid sequence which is acquired from the EPG system and cached, determining that at least one channel in the global channel hybrid sequence which is acquired from the EPG system and cached is updated.

7. A channel setting device, comprising an acquisition module, an updating module and a caching module, wherein
the acquisition module is configured to acquire from an Electronic Program Guide (EPG) system and store an initial user channel hybrid sequence, a global channel hybrid sequence and a correspondence between the initial user channel hybrid sequence and the global channel hybrid sequence to the caching module; and
the updating module is configured to, according to received channel setting information input by a user, update the initial user channel hybrid sequence stored in the caching module and update the correspondence, stored in the caching module, between the initial user channel hybrid sequence and the global channel hybrid sequence.

8. The method according to claim 7, wherein the acquisition module is further configured to acquire from the EGP system and store each transmission stream address corresponding to each channel in the global channel hybrid sequence to the caching module;
the device further comprising:
a determination module, configured to, according to a received user channel hybrid sequence number of a channel requested by the user and the correspondence, stored in the caching module, between the user channel hybrid sequence and the global channel hybrid sequence, determine a global channel hybrid sequence number corresponding to the user channel hybrid sequence number; and
a loading module, configured to, according to the determined global channel hybrid sequence number and the each cached transmission stream address, stored in the caching module, corresponding to the each channel in the global channel hybrid sequence, determine a transmission stream address of the channel requested by the user, and load data corresponding to the transmission stream address for a user terminal.

9. The device according to claim 7, further comprising:
an access module, configured to store the updated correspondence between the user channel hybrid sequence and the global channel hybrid sequence into a non-volatile memory; and
the updating module is further configured to, after the acquisition module reacquires from the EPG system and caches an initial user channel hybrid sequence, a correspondence between the initial user channel hybrid sequence and a global channel hybrid sequence and each transmission stream address corresponding to each channel in the global channel hybrid sequence in the caching module, update the correspondence stored in the caching module according to the correspondence stored in the non-volatile memory.

10. The device according to claim 9, wherein
the determination module is further configured to, when determining that at least one channel in the global channel hybrid sequence which is reacquired from the EPG system and stored in the caching module by the acquisition module is updated, trigger the updating module; and
the updating module is further configured to synchronize a correspondence between a user channel hybrid sequence and a global channel hybrid sequence of the at least one updated channel to the correspondence stored in the non-volatile memory through the access module.

11. The device according to claim 10, wherein
the access module is further configured to store the global channel hybrid sequence, which is acquired from the EPG system and cached, into the non-volatile memory; and
the determination module is further configured to, when an ascending or descending sequence character string of hybrid sequence numbers of the global channel hybrid sequence stored in the non-volatile memory is not matched with an ascending or descending sequence character string of hybrid sequence numbers of the global channel hybrid sequence cached in the caching module, determine that at least one channel in the cached global channel hybrid sequence is updated.

12. The device according to claim 10, wherein the determination module is further configured to extract the global channel hybrid sequence from the correspondence stored in the non-volatile memory, and when an ascending or descending sequence character string of hybrid sequence numbers of the extracted global channel hybrid sequence is not matched with the ascending or descending sequence character string of the hybrid sequence numbers of the global channel hybrid sequence stored in the caching module, determine that at least one channel in the global channel hybrid sequence stored in the caching module is updated.

13. A channel setting apparatus, comprising the channel setting device according to any one of claims 7 to 12.

14. A computer storage medium, in which a computer-executable instruction is stored, the computer-executable instruction being configured to execute the channel setting method according to any one of claims 1 to 6.
